# EUROPEAN PATENT APPLICATION

(11) **EP 0 820 011 A2**
(43) Date of publication of application: **21.01.1998**
(21) Application number: 97304828.3
(22) Date of filing: 02.07.1997
(51) Int. Cl.: G06F 11/26

(54) **Method, apparatus and program storage device for analyzing an electronic circuit**

(30) Priority: 17.07.1996 JP 187077/96; 03.10.1996 JP 262620/96
(71) Applicant: TEIJIN SEIKI COMPANY LIMITED, Osaka (JP)
(72) Inventor: Chiba, Takahiro, c/o Teijin Seiki Comp. Ltd., Miyashiro, Tarui-cho, Fuwa-gun, Gifu-ken (JP)
(74) Representative: Pacitti, Pierpaolo A.M.E.

(57) **Abstract**

Herein disclosed is an electronic circuit analyzing apparatus (30) for analyzing an electronic circuit (140) with the aid of a computer (20). The electronic circuit analyzing apparatus (30) is controlled by the computer (20) in accordance with a predetermined analysis program (100) to access the electronic circuit (140). The electronic circuit (140) includes a storage device (142) for storing therein a target program and a target central processing unit (141) for executing the target program. The electronic circuit analyzing apparatus (30) comprises executing means (101) capable of executing the target program instead of the target central processing unit (141) of the electronic circuit (140) to obtain an execution result; storing means (102) capable of having the execution result stored therein; first mapping means (103) for mapping the storing means (102) into the main memory (22) of the computer (20) to form a first memory map (M11); second mapping means (104) for mapping the storage device (142) of the electronic circuit (140) into the storing means (102) to form a second memory map (M12); instructing means (108) for instructing the executing means (101) to execute the target program and have the execution result stored in the storing means (102) in accordance with the second memory map (M12); reading means (109) for reading out the stored execution result from the storing means (102) in accordance with the first memory map (M11); and analyzing means (110) for analyzing the electronic circuit (140) on the basis of the read execution result. The electronic circuit analyzing apparatus (30) thus constructed described above can read out the execution result with ease and make an advanced analysis of the electronic circuit (140) on the basis of the read execution result without complicated operations.

## Description

### BACKGROUND OF THE INVENTION

### 1. Field of the Invention

The present invention relates to an electronic circuit analyzing method, apparatus and program storage device used for analyzing an electronic circuit including a central processing unit. More particularly, the invention relates to method and apparatus for analyzing an electronic circuit controlled by a computer in accordance with a predetermined analysis program to access the electronic circuit. The invention further relates to a program storage device storing an analysis program executed by a computer with the aid of a predetermined analysis unit to perform a method of analyzing an electronic circuit.

### 2. Description of the Related Art

There have so far burn proposed various types of electronic circuits each including a central processing unit (hereinlater referred to simply as "CPU") and used for constructing electronic systems in various technical fields. The "CPU" is considered to be synonymous with a "micro processing unit" (generally referred to simply as "MPU") in the present invention. The CPU comprises an arithmetic unit, a control unit, an input-output unit and a storage.

The typical electronic system comprises an electronic circuit including a read only memory (hereinlater referred to simply as "ROM") in addition to the CPU. The ROM of the electronic circuit is capable of storing therein predetermined programs executed by the CPU of the electronic circuit to carry out various functions, and data used to execute the predetermined programs. The functions of the electronic circuit can be modified and enhanced merely by replacing the predetermined programs and data with other programs and data. This means that the modifications and enhancements of the functions can be attained merely by exchanging the existing ROM for another ROM storing modified and updated programs and data. The electronic system thus constructed can be considered to be a highly flexible system having a high performance. However, as the performance of the electronic system becomes higher, a test of the electronic circuit in hardware and software becomes more difficult. In order to effectively make the test ofthe electronic circuit in hardware and software, it is necessary to provide any testing support apparatus for supporting the test of the electronic circuit in hardware and software.

There conventional testing support apparatus is well known as an in-circuit emulator (hereinlater referred to simply as "ICE") for emulating the performance of the electronic circuit, and a ROM in-circuit debugger (hereinlater referred to simply as "ROM debugger") for debugging the electronic circuit in hardware and software.

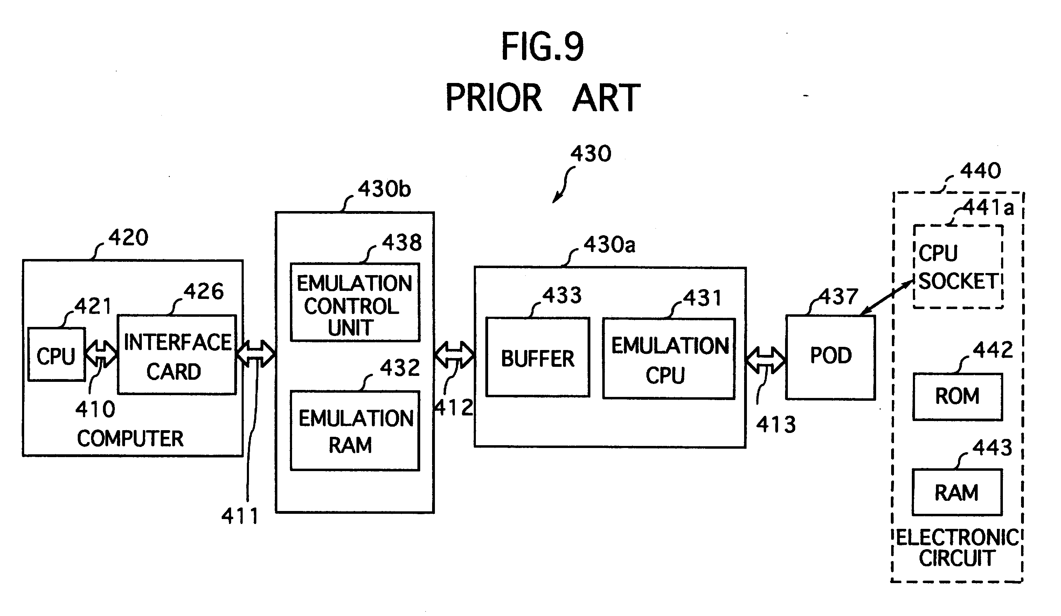

The conventional testing support apparatus is illustrated in FIG. 9. The reference numeral 430 denotes an ICE that is interposed between a computer 420 and an electronic circuit 440 and controlled by the computer 420 to emulate the performance of the electronic circuit 440. The computer 420 comprises a CPU 421, a main memory (not shown), a console device (not shown) including a keyboard and a display unit having a screen, and expansional slots (not shown) into which expansion cards are respectively plugged to connect to the CPU 421 ofthe computer 420 through an internal bus 410. The computer 420 previously stores predetermined programs in its own internal storage device or obtain the predetermined programs from an external storage device. The predetermined programs are loaded into the main memory of the computer 420 and executed by the CPU 421 of the computer 420. The predetermined programs include an emulation program used for instructing the ICE 430 to emulate the performance of the electronic circuit 440 and accordingly for obtaining an execution result. The computer 420 reads out the execution result from the ICE 430 to be displayed on the screen of the display unit of the computer 420. The testing support apparatus is shown in FIG. 9 as comprising an interface card 426 which serves as one of the foregoing expansion cards. The interface card 426 is, on one side thereof, plugged into one of the expansional slots of the computer 420 and, on the other side thereof connected to the ICE 430 through a first cable assembly 411, thereby bringing the computer 420 into communication with the ICE 430.

The electronic circuit 440 comprises a target CPU (not shown), a ROM 442 and a random access memory 443 (hereinlater referred to simply as "RAM"). The target CPU of the electronic circuit 440 is plugged into a CPU socket 441a of the electronic circuit 440 to execute a predetermined target program which is stored in the ROM 442 of the electronic circuit 440. When the electronic circuit 440 is tested, the target CPU of the electronic circuit 440 is unplugged from the CPU socket 441a of the electronic circuit 440.

The ICE 430 comprises an emulation CPU 431, an emulation RAM 432, an emulation control unit 438, a bus buffer 433, and a pod 437. The emulation CPU 431 of the ICE 430 is capable of executing the target program instead of the target CPU of the electronic circuit 440 to obtain execution result. The emulation RAM 432 of the ICE 430 is capable of storing the emulation program and the execution result therein and serves as a work area. The emulation control unit 438 of the ICE 430 executes the emulation program to instruct the emulation CPU 431 of the ICE 430 to execute the target program instead of the CPU of the electronic circuit 440. As a consequence, the performance of the electronic circuit 440 is emulated and traced and, accordingly, the execution result is analyzed. The emulation CPU 431 of the ICE 430 and the bus buffer 433 of the ICE 430 are mounted on a first circuit board 430a, while the emulation control unit 438 ofthe ICE 430 and the emulation RAM 432 of the ICE 430 are mounted on a second circuit board 430b. The first circuit board 430a of the ICE 430 is coupled with the second circuit board 430b of the ICE 430 through a second cable assembly 412. The first circuit board 430a of the ICE 430 is coupled with the pod 437 ofthe ICE 430 through a third cable assembly 413. The pod 437 ofthe ICE 430 is plugged into the CPU socket 441a of the electronic circuit 440 instead of the target CPU of the electronic circuit 440. The bus buffer 433 of the ICE 430 is designed to control the data transmission between the first and second circuit boards 430a and 430b of the ICE 430 and the electronic circuit 440.

When an operator or a programmer enters an emulation start command into the computer 420 through the keyboard, the computer 420 requests the ICE 430 to start in emulating the performance of the electronic circuit 440. As a result, the ICE 430 emulates the performance of the electronic circuit 440 in accordance with the emulation program to obtain the execution result. The computer 420 reads out the execution result from the ICE 430 and display the read execution result on the screen of the display unit of the computer 420.

There is sometimes a necessity to correct the target program depending upon the execution result in the emulation process described above. If the target program is required to be corrected, the testing support apparatus is controlled by the computer 420 to analyze data based on the target program through a correction process, which comprises a succession of steps of: selecting data from data stored in the RAM 443 of the electronic circuit 440; instructing the emulation control unit 438 of the ICE 430 to read out the selected data and to store the read data in the emulation RAM 432 of the ICE 430; reading out the stored data from the emulation RAM 432 ofthe ICE 430; and analyzing the electronic circuit 440 on the basis of the read data. Whenever each step is carried out, the operator or the programmer must enter many commands from through the keyboard of the computer 420.

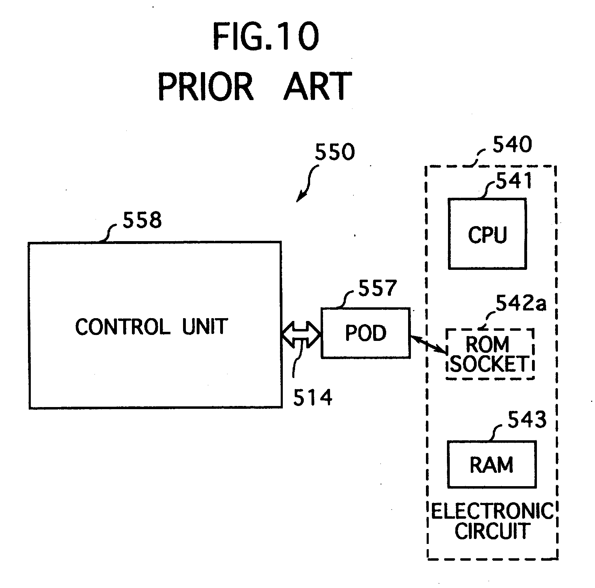

FIG. 10 shows the conventional ROM debugger as another example of the testing support apparatus. As illustrated in FIG. 10, the ROM debugger is denoted by reference numeral 550 and interposed between a computer (not shown) and the electronic circuit 540 and is controlled by the computer to access the electronic circuit 540. The ROM debugger 550 comprises a control unit 558 and a pod 557. The pod 557 of the ROM debugger 550 is coupled to the control unit 558 ofthe ROM debugger 550 through a cable assembly 514 and is plugged into the ROM socket 542a of the electronic circuit 540 instead of the ROM 442 shown in FIG. 9. If there is a necessity to perform advanced analyses of the electronic circuit 540, the testing support apparatus is controlled by the computer through a process, which is comprising a succession of steps of: selecting data from data stored in the RAM 543 of the electronic circuit 540; instructing the control unit 558 of the ROM debugger 550 to read out the selected data and to store the read data in the ROM debugger 550; reading out the stored data from the ROM debugger 550; and analyzing the electronic circuit 540 on the basis of the read data. Whenever each step is carried out, the operator or the programmer must enter many commands from through the keyboard of the computer.

A drawback is, however, encountered in a prior-art testing support apparatus of the above described nature in that it is difficult for the operator or the programmer to operate the testing support apparatus for the advanced analyses of the electronic circuit in accordance with the steps described above, because of the fact that the operator or the programmer is well informed of all of the commands each depending upon an individual architecture of the testing support apparatus. This means that the operator or the programmer is required to be skilled in operations of the testing support apparatus in order to analyze the electronic circuit.

### SUMMARY OF THE INVENTION

It is an object of the present invention to provide an electronic circuit analyzing apparatus for analyzing an electronic circuit with the aid of a computer, thereby making the advanced analyses of the electronic circuit with ease.

It is another object of the present invention to provide an electronic circuit analyzing method of analyzing an electronic circuit with the aid of a computer, thereby making the advanced analyses ofthe electronic circuit with ease.

It is a further object of the present invention to provide a program storage device storing an analysis program executed by a computer with the aid of a predetermined analysis unit to perform a method of analyzing an electronic circuit, thereby making the advanced analyses of the electronic circuit with ease.

In accordance with a first aspect of the present invention, there is provided an electronic circuit analyzing apparatus for analyzing an electronic circuit with the aid of a computer having a central processing unit and a main memory into which a predetermined analysis program is loaded and from which instructions and data are fetched directly into the central processing unit. The electronic circuit analyzing apparatus is controlled by the computer in accordance with the predetermined analysis program to access the electronic circuit. The electronic circuit includes a storage device for storing therein a target program and a target central processing unit for executing the target program. The electronic circuit analyzing apparatus comprises: executing means capable of executing the target program instead of the target central processing unit of the electronic circuit to obtain an execution result; storing means capable of having the execution result stored therein; first mapping means for mapping the storing means into the main memory of the computer to form a first memory map; second mapping means for mapping the storage device of the electronic circuit into the storing means to form a second memory map; instructing means for instructing the executing means to execute the target program and have the execution result stored in the storing means in accordance with the second memory map; reading means for reading out the stored execution result from the storing means in accordance with the first memory map; and analyzing means for analyzing the electronic circuit on the basis ofthe read execution result.

The electronic circuit analyzing apparatus may be constructed as described below. The storing means comprises an emulation memory chip in the electronic circuit analyzing apparatus. The executing means comprises an emulation central processing unit. The electronic circuit analyzing apparatus comprises a plurality of circuit boards interposed between the electronic circuit and the computer. The emulation central processing unit of the executing means and the emulation memory chip of the storing means are mounted on one of the circuit boards nearest in communication to the electronic circuit.

In accordance with a second aspect of the present invention, there is provided an electronic circuit analyzing apparatus for analyzing an electronic circuit with the aid of a computer having a central processing unit and a main memory into which a predetermined analysis program is loaded and from which instructions and data are fetched directly into the central processing unit. The electronic circuit analyzing apparatus is controlled by the computer in accordance with the predetermined analysis program to access the electronic circuit. The electronic circuit includes a storage device capable of storing therein a target program and a target central processing unit for executing the target program to obtain an execution result. The predetermined analysis program includes the target program. The electronic circuit analyzing apparatus comprises: storing means capable of having the target program and the execution result stored therein; first mapping means for mapping the storing means into the main memory of the computer to form a first memory map; second mapping means for mapping the storing means into the storage device ofthe electronic circuit to form a second memory map; transmitting means for transmitting the target program from the computer to the storing means in accordance with the first memory map; instructing means for instructing the target central processing unit of the electronic circuit to access the storing means in accordance with the second memory map to execute the target program and have the execution result stored in the storing means in accordance with the second memory map; reading means for reading out the stored execution result from the storing means in accordance with the first memory map; and analyzing means for analyzing the electronic circuit on the basis ofthe read execution result.

The electronic circuit analyzing apparatus may be constructed as described below. The storing means comprises an emulation memory chip in the electronic circuit analyzing apparatus. The electronic circuit analyzing apparatus comprises a plurality of circuit boards interposed between the electronic circuit and the computer. The emulation memory chip of the storing means is mounted on one of the circuit boards nearest in communication to the electronic circuit.

In accordance with a third aspect of the present invention, there is provided an electronic circuit analyzing apparatus for analyzing an electronic circuit with the aid of a computer having a central processing unit and a main memory into which a predetermined analysis program is loaded and from which instructions and data are fetched directly into the central processing unit. The electronic circuit analyzing apparatus is controlled by the computer in accordance with the predetermined analysis program to access the electronic circuit. The electronic circuit includes a storage device for storing therein a target program and a target central processing unit for executing the target program to obtain an execution result. The predetermined analysis program includes the target program. The electronic circuit analyzing comprises: executing means capable of executing the target program instead of the target central processing unit of the electronic circuit; storing means capable of having the target program and the execution result stored therein; first mapping means for mapping the storing means into the main memory of the computer to form a first memory map; second mapping means for mapping the storage device of the electronic circuit into the storing means to form a second memory map; third mapping means for mapping the storing means into the storage device of the electronic circuit to form a third memory map; selecting means for selecting one from the target central processing unit of the electronic circuit and the executing means to execute the target program; transmitting means for transmitting the target program from the computer to the storing means in accordance with the first memory map when the target central processing unit of the electronic circuit is selected by the selecting means; instructing means for instructing the executing means to execute the target program and have the execution result stored in the storing means in accordance with the second memory map when the executing means is selected by the selecting means, and instructing the target central processing unit of the electronic circuit to access the storing means in accordance with the third memory map to execute the target program and have the execution result stored in the storing means in accordance with the third memory map when the target central processing unit of the electronic circuit is selected by the selecting means; reading means for reading out the stored execution result from the storing means in accordance with the first memory map; and analyzing means for analyzing the electronic circuit on the basis of the read execution result.

The electronic circuit analyzing apparatus may be constructed as described below. The storing means comprises an emulation memory chip in the electronic circuit analyzing apparatus. The executing means comprises an emulation central processing unit. The electronic circuit analyzing apparatus comprises a plurality of circuit boards interposed between the electronic circuit and the computer. The emulation central processing unit of the executing means and the emulation memory chip of the storing means are mounted on one of the circuit boards nearest in communication to the electronic circuit.

In accordance with a fourth aspect of the present invention, there is provided an electronic circuit analyzing method of analyzing an electronic circuit performed by a computer by executing a predetermined analysis program. The computer has a central processing unit and a main memory from which instructions and data are fetched directly into the central processing unit. The electronic circuit includes a storage device for storing therein a target program and a target central processing unit for executing the target program. The electronic circuit analyzing method comprises the steps of: preparing executing means capable of executing the target program instead of the target central processing unit of the electronic circuit to obtain an execution result and storing means capable of having the execution result stored therein; mapping the storing means into the main memory of the computer to form a first memory map; mapping the storage device of the electronic circuit into the storing means to form a second memory map; instructing the executing means to execute the target program and have the execution result stored in the storing means in accordance with the second memory map; reading out the stored execution result from the storing means in accordance with the first memory map; and analyzing the electronic circuit on the basis of the read execution result.

In accordance with a fifth aspect of the present invention, there is provided an electronic circuit analyzing method of analyzing an electronic circuit performed by a computer by executing a predetermined analysis program. The computer has a central processing unit and a main memory from which instructions and data are fetched directly into the central processing unit. The electronic circuit includes a storage device capable of storing therein a target program and a target central processing unit for executing the target program to obtain an execution result. The predetermined analysis program includes the target program. The analyzing method comprises the steps of: preparing storing means capable of having the target program and the execution result stored therein; mapping the storing means into the main memory ofthe computer to form a first memory map; mapping the storing means into the storage device of the electronic circuit to form a second memory map; transmitting the target program from the computer to the storing means in accordance with the first memory map; instructing the target central processing unit of the electronic circuit to access the storing means in accordance with the second memory map to execute the target program and have the execution result stored in the storing means in accordance with the second memory map; reading out the stored execution result from the storing means in accordance with the first memory map; and analyzing the electronic circuit on the basis of the read execution result.

In accordance with a sixth aspect ofthe present invention, there is provided an electronic circuit analyzing method of analyzing an electronic circuit performed by a computer by executing a predetermined analysis program. The computer has a central processing unit and a main memory from which instructions and data are fetched directly into the central processing unit. The electronic circuit includes a storage device for storing therein a target program and a target central processing unit for executing the target program to obtain an execution result. The predetermined analysis program includes the target program. The analyzing method comprises the steps of: preparing executing means capable of executing the target program instead of the target central processing unit ofthe electronic circuit and storing means capable of having the target program and the execution result stored therein; mapping the storing means into the main memory ofthe computer to form a first memory map; mapping the storage device ofthe electronic circuit into the storing means to form a second memory map; mapping the storing means into the storage device ofthe electronic circuit to form a third memory map; selecting one from the target central processing unit of the electronic circuit and the executing means to execute the target program; transmitting the target program from the computer to the storing means in accordance with the first memory map when the target central processing unit ofthe electronic circuit is selected in the selecting step; instructing the executing means to execute the target program and have the execution result stored in the storing means in accordance with the second memory map when the executing means is selected in the selecting step; instructing the target central processing unit of the electronic circuit to access the storing means in accordance with the third memory map to execute the target program and have the execution result stored in the storing means in accordance with the third memory map when the target central processing unit of the electronic circuit is selected in the selecting step; reading out the stored execution result from the storing means in accordance with the first memory map; and analyzing the electronic circuit on the basis of the read execution result.

In accordance with a seventh aspect of the present invention, there is provided a program storage device storing an analysis program executed by a computer with the aid of a predetermined analysis unit to perform a method of analyzing an electronic circuit. The computer has a central processing unit and a main memory from which instructions and data are fetched directly into the central processing unit. The analysis program is loaded into the main memory of the computer 20 when the method is performed. The electronic circuit includes a storage device for storing therein a target program and a target central processing unit for executing the target program. The analysis unit comprises executing means capable of executing the target program instead of the target central processing unit of the electronic circuit to obtain an execution result and storing means capable of having the target program and the execution result stored therein. The method comprises the steps of: mapping the storing means of the analysis unit into the main memory ofthe computer to form a first memory map; mapping the storage device of the electronic circuit into the storing means of the analysis unit to form a second memory map; instructing the executing means of the analysis unit to execute the target program and have the execution result stored in the storing means of the analysis unit in accordance with the second memory map; reading out the stored execution result from the storing means of the analysis unit in accordance with the first memory map; and analyzing the electronic circuit on the basis of the read execution result.

In accordance with an eighth aspect of the present invention, there is provided a program storage device storing an analysis program executed by a computer with the aid of a predetermined analysis unit to perform a method of analyzing an electronic circuit. The computer has a central processing unit and a main memory from which instructions and data are fetched directly into the central processing unit. The analysis program is loaded into the main memory of the computer 20 when the method is performed. The electronic circuit includes a storage device capable of storing therein a target program and a target central processing unit for executing the target program to obtain an execution result. The analysis program includes the target program. The analysis unit comprises storing means capable of having the execution result stored therein. The method comprises the steps of: mapping the storing means of the analysis unit into the main memory of the computer to form a first memory map; mapping the storing means of the analysis unit into the storage device of the electronic circuit to form a second memory map; transmitting the target program from the computer to the storing means of the analysis unit in accordance with the first memory map; instructing the target central processing unit ofthe electronic circuit to access the storing means of the analysis unit in accordance with the second memory map to execute the target program and have the execution result stored in the storing means of the analysis unit in accordance with the second memory map; reading out the stored execution result from the storing means of the analysis unit in accordance with the first memory map; and analyzing the electronic circuit on the basis of the read execution result.

In accordance with a ninth aspect of the present invention, there is provided a program storage device storing an analysis program executed by a computer with the aid of a predetermined analysis unit to perform a method of analyzing an electronic circuit. The computer has a central processing unit and a main memory from which instructions and data are fetched directly into the central processing unit. The analysis program is loaded into the main memory of the computer 20 when the method is performed. The electronic circuit includes a storage device for storing therein a target program and a target central processing unit for executing the target program to obtain an execution result. The analysis program includes the target program. The analysis unit comprises executing means capable of executing the target program instead of the target central processing unit of the electronic circuit and storing means capable of having the target program and the execution result stored therein. The method comprises the steps of: mapping the storing means of the analysis unit into the main memory of the computer to form a first memory map; mapping the storage device of the electronic circuit into the storing means of the analysis unit to form a second memory map; mapping the storing means of the analysis unit into the storage device of the electronic circuit to form a third memory map; selecting one from the target central processing unit of the electronic circuit and the executing means of the analysis unit to execute the target program; transmitting the target program from the computer to the storing means of the analysis unit in accordance with the first memory map when the target central processing unit of the electronic circuit is selected in the selecting step; instructing the executing means of the analysis unit to execute the target program and have the execution result stored in the storing means of the analysis unit in accordance with the second memory map when the executing means of the analysis unit is selected in the selecting step; instructing the target central processing unit of the electronic circuit to access the storing means of the analysis unit in accordance with the third memory map to execute the target program and have the execution result stored in the storing means of the analysis unit in accordance with the third memory map when the target central processing unit of the electronic circuit is selected in the selecting step; reading out the stored execution result from the storing means of the analysis unit in accordance with the first memory map; and analyzing the electronic circuit on the basis of the read execution result.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:
FIG. 1 is a fimctional block diagram showing a first embodiment of an electronic circuit analyzing apparatus according to the present invention;
FIG. 2 is a block diagram showing the first embodiment of the electronic circuit analyzing apparatus serving as an ICE;
FIG. 3 is a diagram showing memory maps used for the electronic circuit analyzing apparatus shown in FIG. 2;
FIG. 4 is an overall outline flowchart showing the flow of processes of the first embodiment of the electronic circuit analyzing apparatus;
FIG. 5 is a functional block diagram showing a second embodiment of an electronic circuit analyzing system according to the present invention;
FIG. 6 is a block diagram showing the second embodiment of the electronic circuit analyzing apparatus serving as a ROM debugger;
FIG. 7 is an overall outline flowchart showing the flow of processes of the second embodiment of the electronic circuit analysing apparatus;
FIG. 8 is a functional block diagram showing a third embodiment of an electronic circuit analyzing apparatus according to the present invention, which serves selectively as an ICE and a ROM debugger;
FIG. 9 is a schematic diagram showing a prior-art electronic circuit analyzing apparatus serving as an ICE; and
FIG. 10 is a schematic diagram showing another prior-art electronic circuit analyzing apparatus serving as a ROM debugger.

### DESCRIPTION OF THE PREFERRED EMBODIMENTS

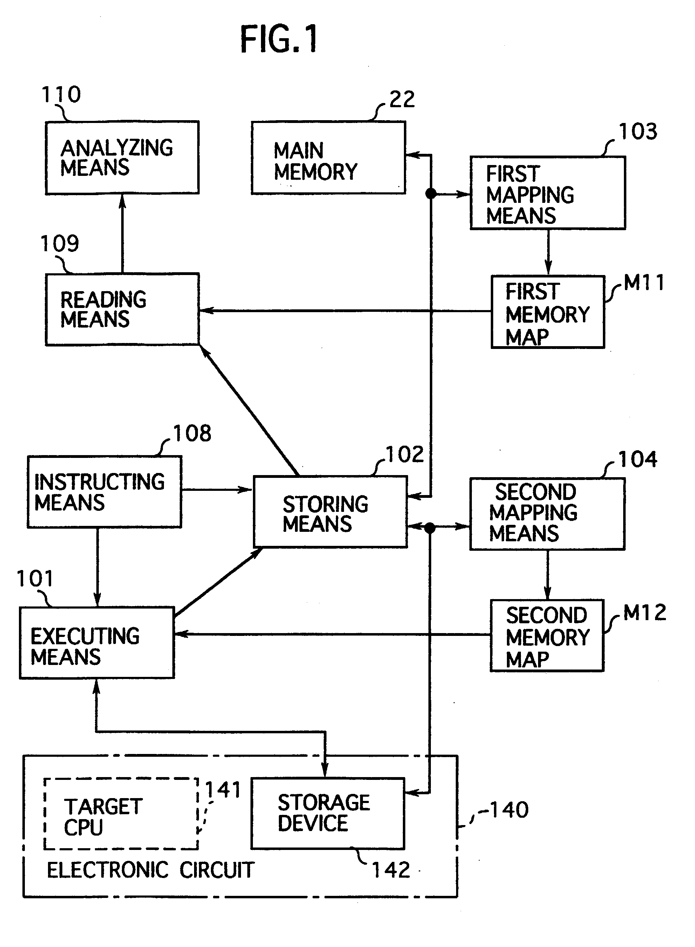

Referring to FIGs. 1 to 4 of the drawings, a first preferred embodiment of an electronic circuit analyzing apparatus according to the present invention will be described hereinlater.

The electronic circuit analyzing apparatus is illustrated as an aggregation of functional elements in FIG. 1 and adapted to analyze an electronic circuit 140 with the aid of a computer 20. The computer 20 has a CPU 21 and a main memory 22 into which a predetermined analysis program 100 is loaded and from which instructions and data are fetched directly into the CPU 21 of the computer 20. The electronic circuit analyzing apparatus is controlled by the computer 20 in accordance with the predetermined analysis program 100 to access the electronic circuit 140. The electronic circuit 140 includes a storage device 142 for storing therein a target program and a target CPU 141 for executing the target program. The electronic circuit analyzing apparatus comprises executing means 101, storing means 102, first mapping means 103, second mapping means 104, instructing means 108, reading means 109 and analyzing means 110. The executing means 101 is capable of executing the target program instead of the target CPU 141 of the electronic circuit 140 to obtain an execution result. The storing means 102 is capable of having the execution result stored therein. The first mapping means 103 is operative to map the storing means 102 into the main memory 22 of the computer 20 to form a first memory map M11. The second mapping means 104 is operative to map the storage device 142 of the electronic circuit 140 into the storing means 102 to form a second memory map M12. The instructing means 108 is operative to instruct the executing means 101 to execute the target program and have the execution result stored in the storing means 102 in accordance with the second memory map M12. The reading means 109 is operative to read out the stored execution result from the storing means 102 in accordance with the first memory map M11. The analyzing means 110 is operative to analyze the electronic circuit 140 on the basis of the read execution result.

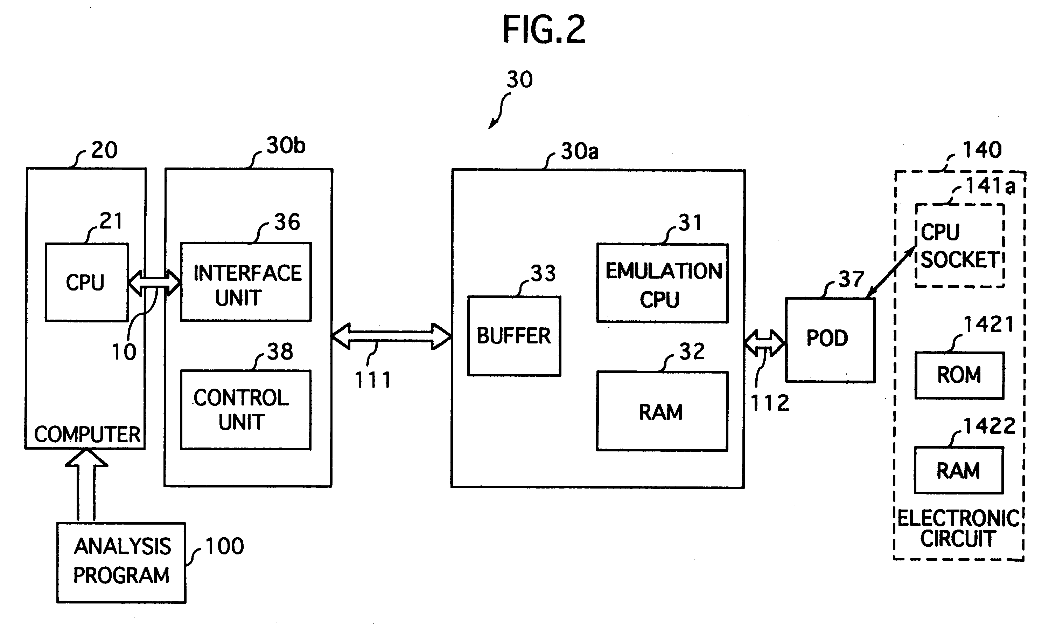

Although FIG. 1 shows the electronic circuit analyzing apparatus as an aggregation of functional elements, FIG. 2 shows the electronic circuit analyzing apparatus as an aggregation of concrete devices collection. Specifically, in FIG. 2 the electronic circuit analyzing apparatus is shown as an ICE 30 interposed between the computer 20 and the electronic circuit 140. The electronic circuit 140 comprises a target CPU 141 which is plugged into a CPU socket 141a, a ROM 1421 and a RAM 1422 both of which serve as the storage device 142 shown in FIG. 1. In this embodiment, the target CPU 141 of the electronic circuit 140 is unplugged from the CPU socket 141a of the electronic circuit 140. The computer 20 is generally constructed by such as a personal computer or a workstation executing various application programs under an operating system (hereinlater referred to simply as "OS"). The computer 20 further comprises a console device (not shown) including a display unit, a keyboard, a mouse and the like, and peripheral devices (not shown) including a printer and storage medium devices. The OS is previously installed into the computer 20. After the installation of the OS, the predetermined analysis program 100 for analyzing the electronic circuit 140 is loaded or installed into the computer 20 under the OS. The predetermined analysis program 100 includes a control program which is loaded into the ICE 30. The ICE 30 is controlled in accordance with the control program to access the electronic circuit 140. The computer 20 and the ICE 30 are connected with each other through a system bus 10 as shown in FIG. 2. The system bus 10 contained in the computer 20 may be replaced with any other busses such as an Industry Standard Architecture bus (generally referred to simply as "ISA bus"), a Peripheral Component Interconnect bus (generally referred to simply as "PCI bus"), a Video Electronics Standards Association Local bus (generally referred to simply as "VL bus").

The ICE 30 is shown in FIG. 2 as comprising an emulation CPU 31, a RAM 32, an interface unit 36, a control unit 38, a bus buffer 33 and a pod 37. The emulation CPU 31 of the ICE 30 is capable of executing the target program instead of the target CPU 141 of the electronic circuit 140 to obtain the execution result, and accordingly is considered to be the executing means 101 shown in FIG. 1. The RAM 32 of the ICE 30 is capable of having the execution result stored therein, and accordingly is considered to be the storing means 102 shown in FIG. 1. The RAM 32 of the ICE 30 is mapped over the main memory 22 of the computer 20 as described below.

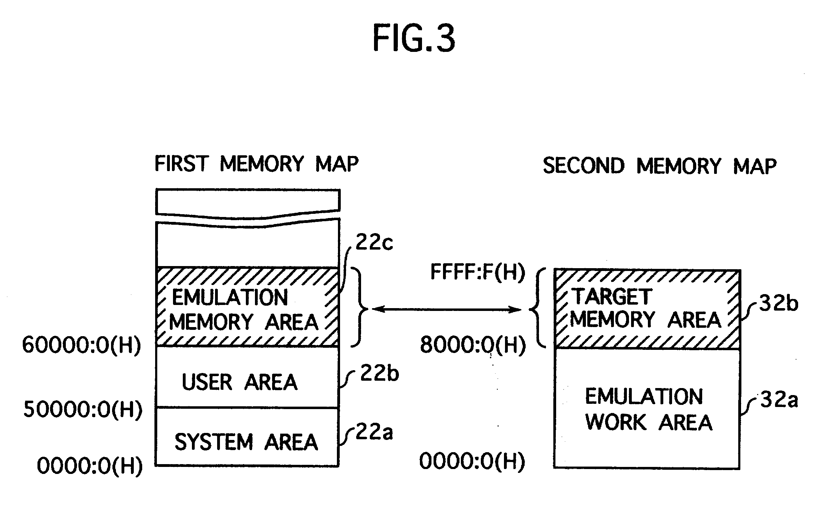

The predetermined analysis program 100 is executed by the CPU 21 of the computer 20 to map the RAM 32 of the ICE 30 into the main memory 22 of the computer 20 to form the first memory map M11 shown in FIG. 3, and map the RAM 1422 of the dectronic circuit 140 into the RAM 32 of the ICE 30 to form the second memory map M12 shown in FIG. 3. For this reason, the predetermined analysis program 100 can be considered to be the first mapping means 103 and the second mapping means 104.

As shown in FIG. 3, the main memory 22 of the computer 20 comprises memory areas including a system area 22a, a user area 22b and an emulation memory area 22c and defined by start addresses "0000:0(H)", "50000:0(H)" and "60000:0(H)", respectively. While, the RAM 32 of the ICE 30 comprises memory areas including an emulation work area 32a and a target memory area 32b and defined by a start addresses "0000:0(H)" and "8000:0(H)", respectively. In FIG. 3, the emulation memory area 22c of the main memory 22 of the computer 20 is assigned to the target memory area 32b of the RAM 32 of the ICE 30. The emulation memory area 22c of the main memory 22 of the computer 20 may be further assigned to the other memory area including the emulation work area 32a of the RAM 32 of the ICE 30. The emulation memory area 22c of the main memory 22 of the computer 20 may be defined by any other start address so as to exclude the emulation memory area 22c of the main memory 22 of the computer 20 from the system area 22a and the user area 22b of the main memory 22 of the computer 20.

Returning back to FIG. 2, the interface unit 36 of the ICE 30 is designed to control input/output operations to transmit commands and data between the computer 20 and the ICE 30. The interface unit 36 of the ICE 30 may be formed from an interface board which can be plugged into the computer 20 through an external slot (not shown) formed in the computer 20. The control unit 38 ofthe ICE 30 serves as the instructing means 108 shown in FIG. 1 and, and accordingly is designed to execute the control program and to accept requests for various operations of the ICE 30 to control all of the emulation CPU 31 of the ICE 30, the RAM 32 of the ICE 30 and the interface unit 36 of the ICE 30. When the control unit 38 of the ICE 30 receives the request for analysis operations, the control unit 38 of the ICE 30 instructs the emulation CPU 31 of the ICE 30 to execute the target program instead of the target CPU 141 of the electronic circuit 140 to obtain the execution result and have the execution result stored in the RAM 32 of the ICE 30 in accordance with the second memory map M12. The predetermined analysis program 100 is executed by the CPU 21 of the computer 20 to read out the execution result in the RAM 32 of the ICE 30 in accordance with the first memory map M11, and to analyze the electronic circuit 140 on the basis of the read execution result. For this reason, the predetermined analysis program 100 can be considered to be the reading means 109 and the analyzing means 110 shown in FIG. 1.

The emulation CPU 31 of the ICE 30 and the RAM 32 of the ICE 30 may be formed on a first circuit board 30a. While, the interface unit 36 of the ICE 30 and the control unit 38 of the ICE 30 may be formed on a second circuit board 30b. The bus buffer 33 ofthe ICE 30 formed on the first circuit board 30a ofthe ICE 30 as shown in FIG. 2 is designed to control input/output operations to transmit the commands and data between the first circuit board 30a of the ICE 30, the second circuit board 30b of the ICE 30 and the electronic circuit 140. The first circuit board 30a of the ICE 30 is coupled with the second circuit board 30b of the ICE 30 through a first cable assembly 111. The pod 37 of the ICE 30 is connected to the first circuit board 30a of the ICE 30 through a second cable assembly 112 to communicate between the ICE 30 and the electronic circuit 140. The pod 37 of the ICE 30 has connection pins plugged into the CPU socket 141a of the electronic circuit 140 instead of the target CPU 141 of the electronic circuit 140. In this embodiment, the ICE 30 has different two circuit boards interposed between the electronic circuit 140 and the computer 20 as described above. The emulation CPU 31 of the ICE 30 and the RAM 32 of the ICE 30 are mounted on the first circuit board 30a of the ICE 30 nearer in communication to the electronic circuit 140 than the second circuit board 30b of the ICE 30. As a result, it is possible to reduce noise in communication between the ICE 30 and the electronic circuit 140 and improve the electronic circuit analyzing apparatus in communication performance.

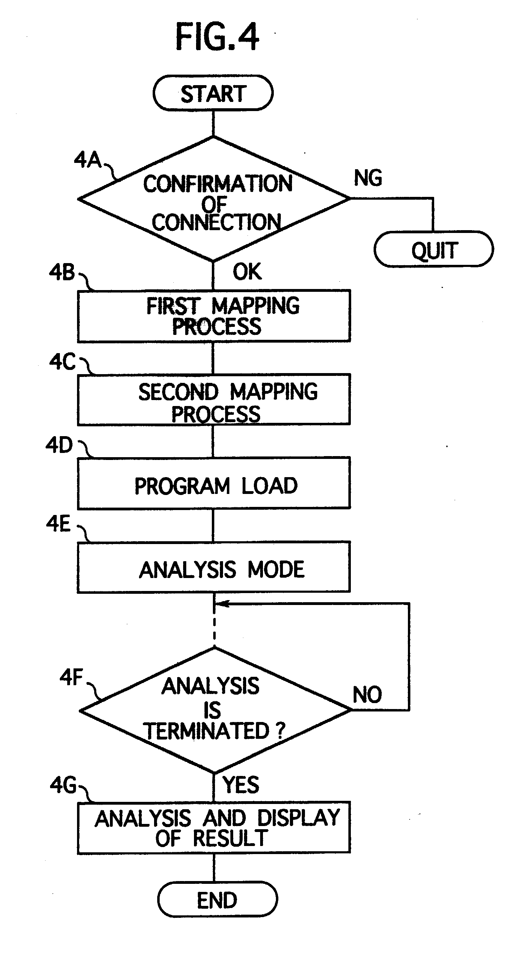

In the first embodiment of the electronic circuit analyzing apparatus thus constructed, when the predetermined analysis program 100 is activated on the computer 20, the analysis operation for the electronic circuit 140 is started. The analysis operation will be explained hereinafter with reference to a flowchart that is shown in FIG. 4 as comprising steps 4A to 4G. In the step 4A, the computer 20 attempts to communicate with the interface unit 36 of the ICE 30 through the system bus 10. If the computer 20 succeeds in the communication with the interface unit 36 of the ICE 30, the step 4A leads to the step 4B. If the computer 20 fails in the communication with the interface unit 36 of the ICE 30, the control in the analysis operation is quitted. In the step 4B, the RAM 32 of the ICE 30 is mapped into the main memory 22 of the computer 20 to form the first memory map M11 shown in FIG. 3. In the step 4C, the RAM 1422 of the electronic circuit 140 is mapped into the RAM 32 ofthe ICE 30 to form the second memory map M12 shown in FIG. 3. In the step 4D, the control program is loaded from the computer 20 into the RAM 32 of the ICE 30. In the step 4E, the computer 20 sends an analysis start command to the control unit 38 ofthe ICE 30 to instruct the control unit 38 to bring the ICE 30 into the analysis operation. If the analysis operation of the ICE 30 is terminated, the ICE 30 posts the termination result to the computer 20 by setting a termination register included in the interface unit 36 of the ICE 30. In the step 4F, a judgment is made upon whether the termination register is set. If the answer in the step 4F is in the affirmative "YES", the step 4F leads to the step 4G in which the computer 20 accesses the RAM 32 of the ICE 30 in accordance with the first memory map M11 shown in FIG. 3 and reads out the execution result stored in the RAM 32 of the ICE 30 to analyze the electronic circuit 140. If the answer in the step 4F is in the negative "NO", the computer 20 waits for the completion of the emulation. In the step 4G, the computer 20 is operated by the predetermined analysis program 100 to analyze the electronic circuit 140 on the basis of the execution result, to display the analysis results on the console of the computer 20 and to output the analysis results to the peripheral devices of the computer 20.

The first embodiment of the electronic circuit analyzing apparatus has an advantage over the prior-art apparatus in making the advanced analysis of the electronic circuit 140 with ease because of the fact not only that the RAM 1422 of the electronic circuit 140 is mapped into the RAM 32 of the ICE 30 to form the second memory map M12 shown on the right-hand side in FIG. 3 but also that the RAM 32 of the ICE 30 is mapped into the main memory 22 of the computer 20 to form the first memory map M11 shown on the left-hand side in FIG. 3. Resulting in the fact that the computer 20 has memory map thus formed, the operator or the programmer can perform the advanced analysis as well as the standard analysis by using not specialized commands but popularized commands. The operator or the programmer, therefore, can work with great efficiency.

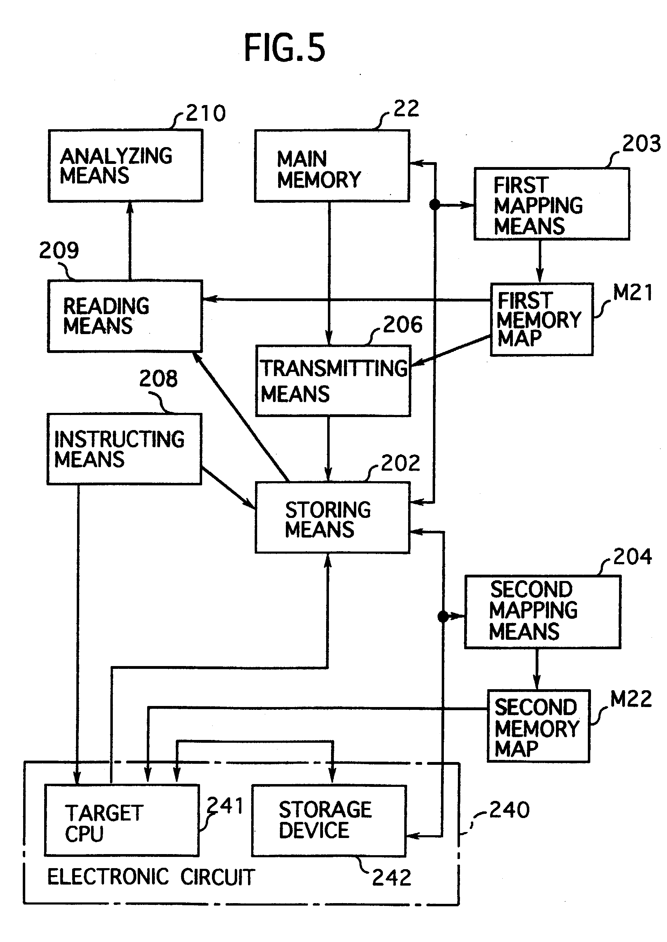

Referring to FIGs. 5 to 7 of the drawings, a second preferred embodiment of an electronic circuit analyzing apparatus according to the present invention will be described hereinlater.

The electronic circuit analyzing apparatus is shown as an aggregation of functional elements in FIG. 5 and adapted to analyze an electronic circuit 240 with the aid of the computer 20. The electronic circuit analyzing apparatus is controlled by the computer 20 in accordance with a predetermined analysis program 200 to access the electronic circuit 240. The electronic circuit 240 includes a storage device 242 capable of storing therein a target program and a target CPU 241 for executing the target program to obtain an execution result. The predetermined analysis program 200 includes the target program.

The electronic circuit analyzing apparatus comprises storing means 202, first mapping means 203, second mapping means 204, transmitting means 206, instructing means 208, reading means 209 and analyzing means 210. The storing means 202 is capable of having the target program and the execution result stored therein. The first mapping means 203 is operative to map the storing means 202 into the main memory 22 of the computer 20 to form a first memory map M21. The second mapping means 204 is operative to map the storing means 202 into the storage device 242 of the electronic circuit 240 to form a second memory map M22. The transmitting means 206 is operative to transmit the target program from the main memory 22 of the computer 20 to the storing means 202 in accordance with the first memory map M21. The instructing means 208 is operative to instruct the target CPU 241 of the electronic circuit 240 to access the storing means 202 in accordance with the second memory map M22 to execute the target program and have the execution result stored in the storing means 202 in accordance with the second memory map M22. The reading means 209 is operative to reading out the stored execution result from the storing means 202 in accordance with the first memory map M21. The analyzing means 210 is operative to analyze the electronic circuit 240 on the basis of the read execution result.

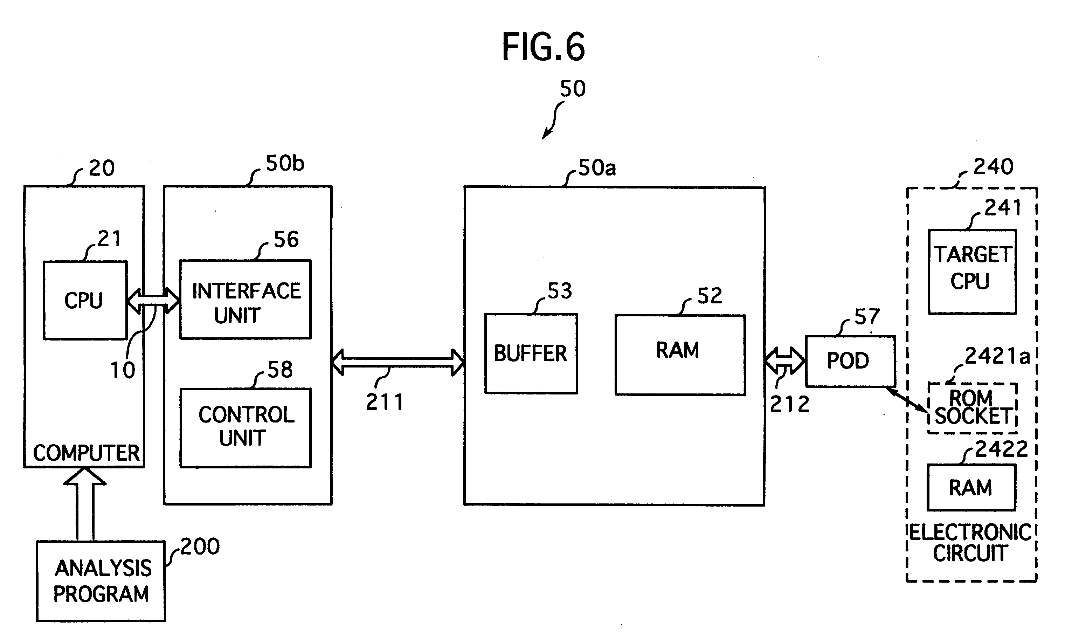

Although FIG. 5 shows the electronic circuit analyzing apparatus as an aggregation of functional elements, FIG. 6 shows the electronic circuit analyzing apparatus as an aggregation of concrete devices collection. Specifically, in FIG. 6 the electronic circuit analyzing apparatus is shown as a ROM debugger 50 interposed between the computer 20 and the electronic circuit 240.

The electronic circuit 240 comprises a target CPU 241, a ROM (not shown) and a RAM 2422 both of which serve as the storage device 242 shown in FIG. 5. The ROM of the electronic circuit 240 is generally plugged into a ROM socket 2421a, but in this embodiment the ROM of the electronic circuit 240 is unplugged from the ROM socket 2421a of the electronic circuit 240. The computer 20 comprises same elements as that of the first embodiment.

The computer 20 has a predetermined OS installed therein. After the installation of the OS, the predetermined analysis program 200 for analyzing the electronic circuit 240 is loaded or installed into the computer 20 under the OS. The predetermined analysis program 200 includes a control program in addition to the target program both of which are loaded into the ROM debugger 50. The ROM debugger 50 is controlled in accordance with the control program to access the electronic circuit 240. The computer 20 and the ROM debugger 50 are connected with each other through the system bus 10 in the same way as those of the first embodiment shown in FIG. 2 are done.

Returning back to FIG. 6, the ROM debugger 50 comprises a RAM 52, an interface unit 56, a control unit 58, a bus buffer 53 and a pod 57. The RAM 52 of the ROM debugger 50 is capable of having the target program and the execution result stored therein, and accordingly is considered to be the storing means 202 shown in FIG. 5. The RAM 52 of the ROM debugger 50 is mapped over the main memory 22 ofthe computer 20 as described hereinlater.

The predetermined analysis program 200 is executed by the CPU 21 of the computer 20 to map the RAM 52 ofthe ROM debugger 50 into the main memory 22 of the computer 20 to form the first memory map M21, and to map the RAM 52 of the ROM debugger 50 into the RAM 2422 of the electronic circuit 240 to form the second memory map M22. The predetermined analysis program 200, therefore, can be considered to be the first mapping means 203 and the second mapping means 204 shown in FIG. 5.

Similarly to memory maps shown in FIG. 3, the main memory 22 of the computer 20 comprises memory areas including a system area 22a, a user area 22b and an emulation memory area 22c. While, the RAM 52 of the ROM debugger 50 comprises memory areas including an emulation work area and target memory area. The emulation memory area 22c of the main memory 22 of the computer 20 is assigned to the target memory area of the RAM 52 of the ROM debugger 50. The target memory area of the RAM 52 of the ROM debugger 50 is assigned into the target memory 242 of the electronic circuit 240.

Returning back to FIG. 6, the interface unit 56 of the ROM debugger 50 serves as the transmitting means 206 shown in FIG. 5 and is designed to control input/output operations to transmit commands and data between the computer 20 and the ROM debugger 50. The interface unit 56 of the ROM debugger 50 may be formed from an interface board as described in the first embodiment. The control unit 58 of the ROM debugger 50 serves as the instructing means 208 shown in FIG. 5 and accordingly is designed to execute the control program and to accept requests for various operations of the ROM debugger 50 to control all of the RAM 52 of the ROM debugger 50 and the interface unit 56 of the ROM debugger 50. When the control unit 58 of the ROM debugger 50 receives the request for analysis operations, the control unit 58 of the ROM debugger 50 instructs the target CPU 241 of the electronic circuit 240 to access the RAM 52 of the ROM debugger 50 in accordance with the second memory map M22 to execute the target program and have the execution result stored in the RAM 52 of the ROM debugger 50 in accordance with the second memory map M22. The predetermined analysis program 200 is further executed by the CPU 21 of the computer 20 to read out the execution result in the RAM 52 of the ROM debugger 50 in accordance with the first memory map M21 and to analyze the electronic circuit 240 on the basis of the read execution result. The predetermined analysis program 200, therefore, can be considered to be the reading means 209 and the analyzing means 210 shown in FIG. 5.

The RAM 52 of the ROM debugger 50 may be formed on a first circuit board 50a. While, the interface unit 56 of the ROM debugger 50 and the control unit 58 of the ROM debugger 50 may be formed on a second circuit board 50b. The bus buffer 53 of the ROM debugger 50 is similarly to the bus buffer 33 of the ICE 30 of the first embodiment. The pod 57 of the ROM debugger 50 is connected to the first circuit board 50a of the ROM debugger 50 through a second cable assembly 212 to communicate between the ROM debugger 50 and the electronic circuit 240. The pod 57 of the ROM debugger 50 has connection pins plugged into the ROM socket 2421a of the electronic circuit 240 instead of the ROM 421 of the electronic circuit 240. In this embodiment, the ROM debugger 50 has different two circuit boards interposed between the electronic circuit 240 and the computer 20 as described above. The RAM 52 of the ROM debugger 50 is mounted on the first circuit board 50a of the ROM debugger 50 nearer in communication to the electronic circuit 240 than the second circuit board 50b of the ROM debugger 50. As a result, it is possible to reduce noise in communication between the ROM debugger 50 and the electronic circuit 240 and improve the electronic circuit analyzing apparatus in communication performance.

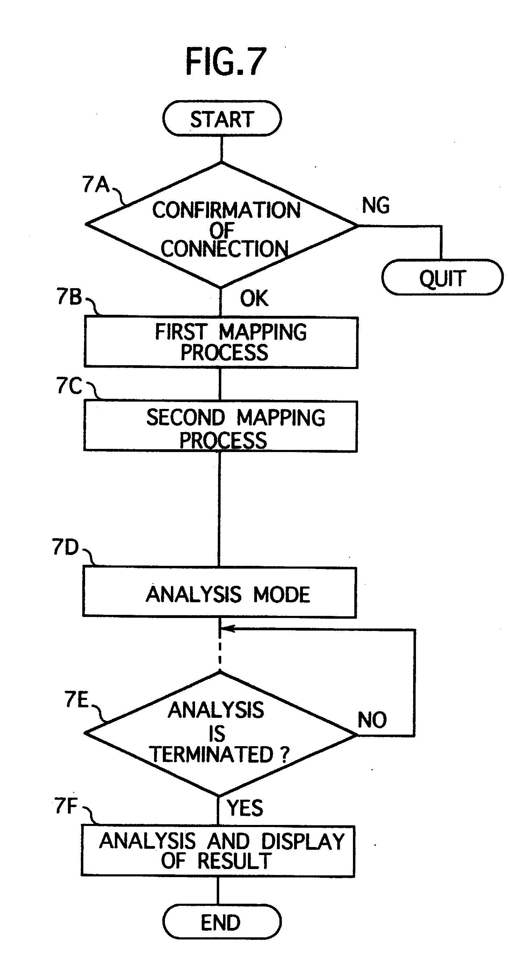

In the second embodiment of the electronic circuit analyzing apparatus thus constructed, when the predetermined analysis program 200 is activated on the computer 20, the analysis operation for the electronic circuit 240 is started. The analysis operation will be explained hereinafter with reference to a flowchart that is shown in FIG. 7 as comprising steps 7A to 7F. In the step 7A, the computer 20 attempts to communicate with the interface unit 56 of the ROM debugger 50 through the system bus 10. If the computer 20 succeeds in the communication with the interface unit 56 of the ROM debugger 50, the step 7A leads to the step 7B. If the computer 20 fails in the commmunication with the interface unit 56 of the ROM debugger 50, the control of the analysis operations is quitted. In the step 7B, the RAM 52 ofthe ROM debugger 50 is mapped into the main memory 22 ofthe computer 20 to form the first memory map M21. In the step 7C, the RAM 52 of the ROM debugger 50 is mapped into the RAM 2422 of the electronic circuit 240 to form the second memory map M22. In the step 7D, the computer 20 sends an analysis start command to the control unit 58 of the ROM debugger 50 to cause the control unit 58 to control the ROM debugger 50 to analyze the electronic circuit 240. If the analysis operation of the ROM debugger 50 is terminated, the ROM debugger 50 posts the termination result to the computer 20 by setting a termination register included in the interface unit 56 of the ROM debugger 50. In the step 7E, a judgment is made upon whether the termination register is set. If the answer in the step 7E is in the affirmative "YES", the step 7E leads to the step 7F in which the computer 20 accesses the RAM 52 of the ROM debugger 50 in accordance with the first memory map M21 and read out the execution result stored in the RAM 52 of the ROM debugger 50 to analyze the electronic circuit 240. If the answer in the step 7E is in the negative "NO", the computer 20 waits for the completion ofthe analysis operation. In the step 7F, the predetermined analysis program 200 is executed to analyze the electronic circuit 240 on the basis of the execution result, to display the analysis results on the console of the computer 20 and to output the analysis results to the peripheral devices ofthe computer 20.

The second embodiment of the electronic circuit analyzing apparatus has an advantage over the prior-art apparatus in making the advanced analysis of the electronic circuit 240 with ease because of the fact not only that the RAM 52 of the ROM debugger 50 is mapped into the RAM 2422 of the electronic circuit 240 to form the second memory map M22 shown on the right-hand side in FIG. 3 but also that the RAM 52 ofthe ROM debugger 50 is mapped into the main memory 22 of the computer 20 to form the first memory map M21 shown on the left-hand side in Fig. 3. Resulting in the fact that the computer 20 has memory map thus formed, the operator or the programmer can perform the advanced analysis as well as the standard analysis by using not specialized commands but popularized commands. The operator or the programmer, therefore, can work with great efficiency.

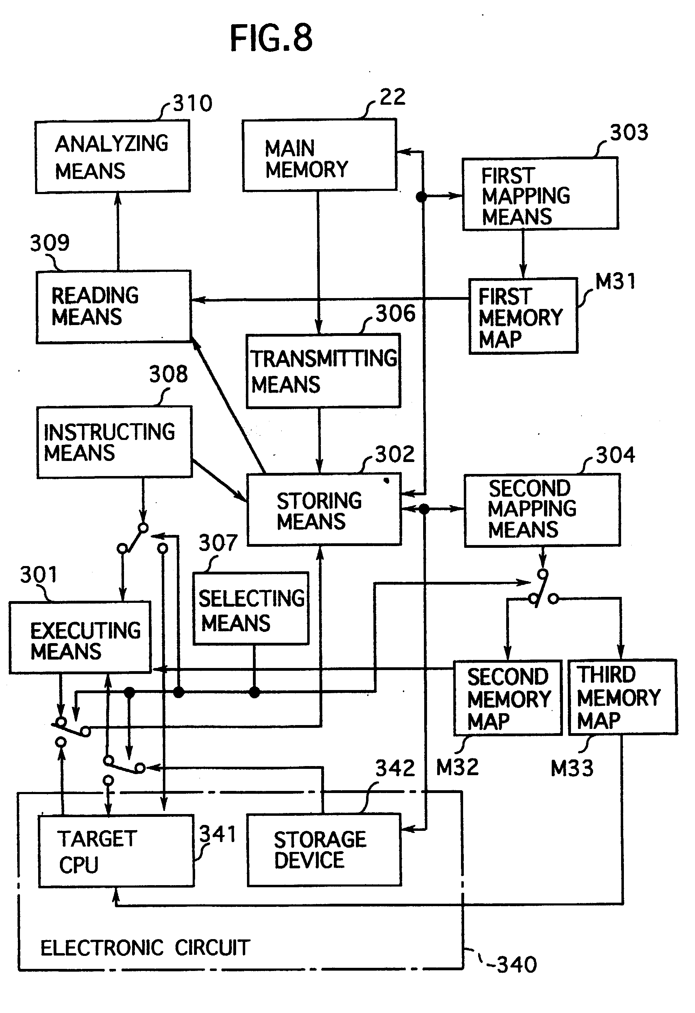

Referring to FIG. 8 of the drawings, a third preferred embodiment of an electronic circuit analyzing apparatus according to the present invention will be described hereinlater.

The electronic circuit analyzing apparatus is shown as an aggregation of functional elements in FIG. 8 and adapted to analyze an electronic circuit 340 with the aid of the computer 20. The electronic circuit analyzing apparatus is controlled by the computer 20 in accordance with a predetermined analysis program to access the electronic circuit 340. The electronic circuit 340 includes a storage device 342 capable of storing therein a target program and a target CPU 341 for executing the target program to obtain an execution result. The predetermined analysis program includes the target program.

The electronic circuit analyzing apparatus comprises executing means 301, storing means 302, first mapping means 303, second mapping means 304, transmitting means 306, selecting means 307, instructing means 308, reading means 309 and analyzing means 310. The executing means 301 is capable of executing the target program instead of the target CPU 341 of the electronic circuit 340. The storing means 302 is capable selectively of having the execution result stored therein and of having the target program and the execution result stored therein. The storing means 302, therefore, serves selectively as the storing means 102 shown in FIG. 1 and as the storing means 202 shown in FIG. 5. The first mapping means 303 is operative to map the storing means 302 into the main memory 22 of the computer 20 to form a first memory map M31. The second mapping means 304 is operative selectively to map the storage device 342 ofthe electronic circuit 340 into the storing means 302 to form a second memory map M32 and to map the storing means 302 into the storage device 342 of the electronic circuit 340 to form a third memory map M33. The second mapping means 304, therefore, serves selectively as the second mapping means 104 shown in FIG. 1 and as the second mapping means 204 shown in FIG. 5. The transmitting means 306 is operative to transmit the target program from the main memory 22 of the computer 20 to the storing means 302 in accordance with the first memory map M31. The selecting means 307 is operative to select one from the target CPU 341 of the electronic circuit 340 and the executing means 301 to execute the target program. The instructing means 308 is operative selectively, to instruct the executing means 301 to execute the target program and have the execution result stored in the storing means 302 in accordance with the second memory map M32, and to instruct the target CPU 341 ofthe electronic circuit 340 to access the storing means 302 in accordance with the third memory map M33 to execute the target program and have the execution result stored in the storing means 302 in accordance with the third memory map M33. The instructing means 308, therefore, serves selectively as the instructing means 108 shown in FIG. 1 and as the instructing means 208 shown in FIG. 5. The reading means 309 is operative to reading out the stored execution result from the storing means 302 in accordance with the first memory map M31. The analyzing means 310 is operative to analyze the electronic circuit 240 on the basis of the read execution result.

When the executing means 301 is elected by the selecting means 307, the executing means 301, the storing means 302, the first mapping means 303, the second mapping means 304, the instructing means 308, the reading means 309 and the analyzing means 310 serve as the executing means 101, the storing means 102, the first mapping means 103, the second mapping means 104, the instructing means 108, the reading means 109 and the analyzing means 110, respectively, shown in FIG. 1. When the target CPU 341 of the electronic circuit 340 is selected by the selecting means 307, the storing means 302, the first mapping means 303, the second mapping means 304, the transmitting means 306, the instructing means 308, the reading means 309 and the analyzing means 310 serve as the storing means 202, the first mapping means 203, the second mapping means 204, the transmitting means 206, the instructing means 208, the reading means 209 and the analyzing means 210, respectively, shown in FIG. 5.

The electronic circuit analyzing apparatus shown in FIG. 8 is constructed with easy by combining the apparatuses shown in FIGs. 2 and 6 and, for this reason, is not illustrated in drawings in the form of a congregation of concrete devices. In the third embodiment, are provided two analysis programs consisting of the predetermined analysis programs 100 and 200 shown in FIGs. 2 and 6, respectively. Alternatively, may be provided one analysis program functioning selectively as the predetermined analysis program 100 shown in FIG. 2 and as the other analysis program 200 shown in FIG. 6.

As will be appreciated from the foregoing description, in addition to the advantages of the first and second embodiments, the unilateral electronic circuit analyzing apparatus can serve as both of the ICE and the ROM debugger by selecting one from the pod 37 of the ICE 30 and the pod 57 of the ROM debugger 50 to connect to the electronic circuit 340. Accordingly, the unilateral electronic circuit analyzing apparatus can be enhanced in functional performance.

The many features and advantages of the invention are apparent from the detailed specification and thus it is intended by the appended claims to cover all such features and advantages of the invention which fall within the true spirit and scope thereof. Further, since numerous modifications and changes will readily occur to those skilled in the art, it is not desired to limit the invention to the exact construction and operation illustrated and described, and accordingly, all suitable modifications and equivalents may be resorted to, falling with the scope of the invention.

## Claims

1. An electronic circuit analyzing apparatus (30) for analyzing an electronic circuit (140) with the aid ofa computer (20) having a central processing unit (21) and a main memory (22) into which a predetermined analysis program (100) is loaded and from which instructions and data are fetched directly into said central processing unit (21), said apparatus (30) being controlled by said computer (20) in accordance with said predetermined analysis program (100) to access said electronic circuit (140), said electronic circuit (140) including a storage device (142, 1421 and 1422) for storing therein a target program and a target central processing unit (141) for executing said target program, comprising:
executing means (101 and 31) capable of executing said target program instead of said target central processing unit (141) of said electronic circuit (140) to obtain an execution result;
storing means (102 and 32) capable of having said execution result stored therein;
first mapping means (103 and 20) for mapping said storing means (102 and 32) into said main memory (22) of said computer (20) to form a first memory map (M11);
second mapping means (104 and 20) for mapping said storage device (142, 1421 and 1422) of said electronic circuit (140) into said storing means (102 and 32) to form a second memory map (M12);
instructing means (108, 38 and 20) for instructing said executing means (101 and 31) to execute said target program and have said execution result stored in said storing means (102 and 32) in accordance with said second memory map (M12);
reading means (109 and 20) for reading out the stored execution result from said storing means (102 and 32) in accordance with said first memory map (M11); and
analyzing means (110 and 20) for analyzing said electronic circuit (140) on the basis of the read execution result.

2. An electronic circuit analyzing apparatus as set forth in claim 1, in which said storing means (102 and 32) comprises an emulation memory chip, said executing means (101 and 31) comprising an emulation central processing unit, said electronic circuit analyzing apparatus (30) comprising a plurality of circuit boards (30a and 30b) interposed between said electronic circuit (140) and said computer (20), and said emulation central processing unit of said executing means (101 and 31) and said emulation memory chip of said storing means (102 and 32) being mounted on one of said circuit boards (30a) nearest in communication to said electronic circuit (140).

3. An electronic circuit analyzing apparatus (50) for analyzing an electronic circuit (240) with the aid of a computer (20) having a central processing unit (21) and a main memory (22) into which a predetermined analysis program (200) is loaded and from which instructions and data are fetched directly into said central processing unit (21), said apparatus (50) being controlled by said computer (20) in accordance with said predetermined analysis program (200) to access said electronic circuit (240), said electronic circuit (240) including a storage device (242 and 2422) capable of storing therein a target program and a target central processing unit (241) for executing said target program to obtain an execution result, said predetermined analysis program (200) including said target program, comprising:
storing means (202 and 52) capable of having said target program and said execution result stored therein;
first mapping means (203 and 20) for mapping said storing means (202 and 52) into said main memory (22) of said computer (20) to form a first memory map (M21);
second mapping means (204 and 20) for mapping said storing means (202 and 52) into said storage device (242 and 2422) of said electronic circuit (240) to form a second memory map (M22);
transmitting means (206, 56 and 20) for transmitting said target program from said computer (20) to said storing means (202 and 52) in accordance with said first memory map (M21);
instructing means (208, 58 and 20) for instructing said target central processing unit (241) of said electronic circuit (240) to access said storing means (202 and 52) in accordance with said second memory map (M22) to execute said target program and have said execution result stored in said storing means (202 and 52) in accordance with said second memory map (M22);
reading means (209 and 20) for reading out the stored execution result from said storing means (202 and 52) in accordance with said first memory map (M21); and
analyzing means (210 and 20) for analyzing said electronic circuit (240) on the basis of the read execution result.

4. An electronic circuit analyzing apparatus as set forth in claim 3, in which said storing means (202 and 52) comprises an emulation memory chip, said electronic circuit analyzing apparatus (50) comprising a plurality of circuit boards (50a and 50b) interposed between said electronic circuit (240) and said computer (20), and said emulation memory chip of said storing means (202 and 52) being mounted on one of said circuit boards (50a) nearest in communication to said electronic circuit (240).

5. An electronic circuit analyzing apparatus (30; 50) for analyzing an electronic circuit (340) with the aid of a computer (20) having a central processing unit (21) and a main memory (22) into which a predetermined analysis program (100; 200) is loaded and from which instructions and data are fetched directly into said central processing unit (21), said apparatus (30; 50) being controlled by said computer (20) in accordance with said predetermined analysis program (100; 200) to access said electronic circuit (340), said electronic circuit (340) including a storage device (342) for storing therein a target program and a target central processing unit (341) for executing said target program to obtain an execution result, said predetermined analysis program (200) including said target program, comprising:
executing means (301; 101, 31) capable of executing said target program instead of said target central processing unit (341) of said electronic circuit (340);
storing means (302; 102, 32; 202, 52) capable of having said target program and said execution result stored therein;
first mapping means (303, 20) for mapping said storing means (302; 102, 32; 202, 52) into said main memory (22) of said computer (20) to form a first memory map (M31);
second mapping means (304, 20) for mapping said storage device (342) of said electronic circuit (340) into said storing means (302; 102, 32; 202, 52) to form a second memory map (M32);
third mapping means (304, 20) for mapping said storing means (302; 102, 32; 202, 52) into said storage device (342) of said electronic circuit (340) to form a third memory map (M33);
selecting means (307, 20; 37; 57) for selecting one from said target central processing unit (341) of said electronic circuit (340) and said executing means (301; 101, 31) to execute said target program;
transmitting means (306, 20; 206, 56) for transmitting said target program from said computer (20) to said storing means (302; 202, 52) in accordance with said first memory map (M31) when said target central processing unit (341) of said electronic circuit (340) is selected by said selecting means (307, 20; 57);
instructing means (308, 20; 108, 38; 208, 58) for instructing said executing means (301; 101, 31) to execute said target program and have said execution result stored in said storing means (302; 102, 32) in accordance with said second memory map (M32) when said executing means (301; 101, 31) is selected by said selecting means (307, 20; 37), and instructing said target central processing unit (341) of said electronic circuit (340) to access said storing means (302; 202, 52) in accordance with said third memory map (M33) to execute said target program and have said execution result stored in said storing means (302; 202, 52) in accordance with said third memory map (M33) when said target central processing unit (341) ofthe electronic circuit (340) is selected by said selecting means (307, 20; 57);
reading means (309, 20; 109, 209) for reading out the stored execution result from said storing means (302; 102, 32; 202, 52) in accordance with said first memory map (M31); and
analyzing means (310, 20; 110; 210) for analyzing said electronic circuit (340) on the basis of the read execution result.

6. An electronic circuit analyzing apparatus as set forth in claim 5, in which said storing means (302; 102, 32; 202, 52) comprises an emulation memory chip, said executing means (301; 101, 31) comprising an emulation central processing unit, said electronic circuit analyzing apparatus (30; 50) comprising a plurality of circuit boards (30a, 30b; 50a, 50b) interposed between said electronic circuit (340) and said computer (20), and said emulation central processing unit of said executing means (301; 101, 31) and said emulation memory chip of said storing means (302; 102, 32; 202, 52) being mounted on one of said circuit boards (30a; 50a) nearest in communication to said electronic circuit (340).

7. An electronic circuit analyzing method of analyzing an electronic circuit (140) performed by a computer (20) by executing a predetermined analysis program (100), said computer (20) having a central processing unit (21) and a main memory (22) from which instructions and data are fetched directly into said central processing unit (21), said electronic circuit (140) including a storage device (142, 1421 and 1422) for storing therein a target program and a target central processing unit (141) for executing said target program, comprising the steps of:
preparing executing means (101 and 31) capable of executing said target program instead of said target central processing unit (141) of said electronic circuit (140) to obtain an execution result and storing means (102 and 32) capable of having said execution result stored therein;
mapping said storing means (102 and 32) into said main memory (22) of said computer (20) to form a first memory map (M11);
mapping said storage device (142, 1421 and 1422) of said electronic circuit (140) into said storing means (102 and 32) to form a second memory map (M12);
instructing said executing means (101 and 31) to execute said target program and have said execution result stored in said storing means (102 and 32) in accordance with said second memory map (M12);
reading out the stored execution result from said storing means (102 and 32) in accordance with said first memory map (M11); and
analyzing said electronic circuit (140) on the basis ofthe read execution result.

8. An electronic circuit analyzing method of analyzing an electronic circuit (240) performed by a computer (20) by executing a predetermined analysis program (200), said computer (20) having a central processing unit (21) and a main memory (22) from which instructions and data are fetched directly into said central processing unit (21), said electronic circuit (240) including a storage device (242 and 2422) capable of storing therein a target program and a target central processing unit (241) for executing said target program to obtain an execution result, said predetermined analysis program (200) including said target program, comprising the steps of:
preparing storing means (202 and 52) capable of having said target program and said execution result stored therein;
mapping said storing means (202 and 52) into said main memory (22) of said computer (20) to form a first memory map (M21);
mapping said storing means (202 and 52) into said storage device (242 and 2422) of said electronic circuit (240) to form a second memory map (M22);
transmitting said target program from said computer (20) to said storing means (202 and 52) in accordance with said first memory map (M21);
instructing said target central processing unit (241) of said electronic circuit (240) to access said storing means (202 and 52) in accordance with said second memory map (M22) to execute said target program and have said execution result stored in said storing means (202 and 52) in accordance with said second memory map (M22);
reading out the stored execution result from said storing means (202 and 52) in accordance with said first memory map (M21); and
analyzing said electronic circuit (240) on the basis of the read execution result.

9. An electronic circuit analyzing method of analyzing an electronic circuit (340) performed by a computer (20) by executing a predetermined analysis program (100; 200), said computer (20) having a central processing unit (21) and a main memory (22) from which instructions and data are fetched directly into said central processing unit (21), said electronic circuit (340) including a storage device (342) for storing therein a target program and a target central processing unit (341) for executing said target program to obtain an execution result, said predetermined analysis program (200) including said target program, comprising the steps of:
preparing executing means (301; 101, 31) capable of executing said target program instead of said target central processing unit (341) of said electronic circuit (340) and storing means (302; 102, 32; 202, 52) capable of having said target program and said execution result stored therein;
mapping said storing means (302; 102, 32; 202, 52) into said main memory (22) of said computer (20) to form a first memory map (M31);
mapping said storage device (342) of said electronic circuit (340) into said storing means (302; 102, 32; 202, 52) to form a second memory map (M32);
mapping said storing means (302; 102, 32; 202, 52) into said storage device (342) of said electronic circuit (340) to form a third memory map (M33);
selecting one from said target central processing unit (341) of said electronic circuit (340) and said executing means (301; 101, 31) to execute said target program;
transmitting said target program from said computer (20) to said storing means (302; 102, 32; 202, 52) in accordance with said first memory map (M31) when said target central processing unit (341) of said electronic circuit (340) is selected in said selecting step;
instructing said executing means (301; 101, 31) to execute said target program and have said execution result stored in said storing means (302; 102, 32) in accordance with said second memory map (M32) when said executing means (301; 101, 31) is selected in said selecting step;
instructing said target central processing unit (341) of said electronic circuit (340) to access said storing means (302; 202, 52) in accordance with said third memory map (M33) to execute said target program and have said execution result stored in said storing means (302; 202, 52) in accordance with said third memory map (M33) when said target central processing unit (341) of said electronic circuit (340) is selected in said selecting step;
reading out the stored execution result from said storing means (302; 102, 32; 202, 52) in accordance with said first memory map (M31); and
analyzing said electronic circuit (340) on the basis of the read execution result.

10. A program storage device storing an analysis program (100) executed by a computer (20) with the aid of a predetermined analysis unit (30) to perform a method of analyzing an electronic circuit (140), said computer (20) having a central processing unit (21) and a main memory (22) from which instructions and data are fetched directly into said central processing unit (21), said analysis program (100) being loaded into said main memory (22) of the computer (20) when said method is performed, said electronic circuit (140) including a storage device (142, 1421 and 1422) for storing therein a target program and a target central processing unit (141) for executing said target program, said analysis unit (30) comprising executing means (101 and 31) capable of executing said target program instead of said target central processing unit (141) of said electronic circuit (140) to obtain an execution result and storing means (102 and 32) capable of having said target program and said execution result stored therein, said method comprising the steps of:
mapping said storing means (102 and 32) of said analysis unit (30) into said main memory (22) of said computer (20) to form a first memory map (M11);
mapping said storage device (142, 1421 and 1422) of said electronic circuit (140) into said storing means (102 and 32) of said analysis unit (30) to form a second memory map (M12);
instructing said executing means (101 and 31) of said analysis unit (30) to execute said target program and have said execution result stored in said storing means (102 and 32) of said analysis unit (30) in accordance with said second memory map (M12);
reading out the stored execution result from said storing means (102 and 32) of said analysis unit (30) in accordance with said first memory map (M11); and
analyzing said electronic circuit (140) on the basis of the read execution result.

11. A program storage device storing an analysis program (200) executed by a computer (20) with the aid of a predetermined analysis unit (50) to perform a method of analyzing an electronic circuit (240), said -computer (20) having a central processing unit (21) and a main memory (22) from which instructions and data are fetched directly into said central processing unit (21), said analysis program (200) being loaded into said main memory (22) of the computer (20) when said method is performed, said electronic circuit (240) including a storage device (242 and 2422) capable of storing therein a target program and a target central processing unit (241) for executing said target program to obtain an execution result, said analysis program (200) including said target program, said analysis unit (50) comprising storing means (202 and 52) capable of having said execution result stored therein, said method comprising the steps of:
mapping said storing means (202 and 52) of said analysis unit (50) into said main memory (22) of said computer (20) to form a first memory map (M21);
mapping said storing means (202 and 52) of said analysis unit (50) into said storage device (242 and 2422) of said electronic circuit (240) to form a second memory map (M22);
transmitting said target program from said computer (20) to said storing means (202 and 52) of said analysis unit (50) in accordance with said first memory map (M21);
instructing said target central processing unit (241) of said electronic circuit (240) to access said storing means (202 and 52) of said analysis unit (50) in accordance with said second memory map (M22) to execute said target program and have said execution result stored in said storing means (202 and 52) of said analysis unit (50) in accordance with said second memory map (M22);
reading out the stored execution result from said storing means (202 and 52) of said analysis unit (50) in accordance with said first memory map (M21); and
analyzing said electronic circuit (240) on the basis of the read execution result.

12. A program storage device storing an analysis program (100; 200) executed by a computer (20) with the aid of a predetermined analysis unit (30; 50) to perform a method of analyzing an electronic circuit (340), said computer (20) having a central processing unit (21) and a main memory (22) from which instructions and data are fetched directly into said central processing unit (21), said analysis program (100; 200) being loaded into said main memory (22) of the computer (20) when said method is performed, said electronic circuit (340) including a storage device (342) for storing therein a target program and a target central processing unit (341) for executing said target program to obtain an execution result, said analysis program (200) including said target program, said analysis unit (30; 50) comprising executing means (301; 101, 31) capable of executing said target program instead of said target central processing unit (341) of said electronic circuit (340) and storing means (302; 102, 32; 202, 52) capable of having said target program and said execution result stored therein, said method comprising the steps of:
mapping said storing means (302; 102, 32; 202, 52) of said analysis unit (30; 50) into said main memory (22) of said computer (20) to form a first memory map (M31);
mapping said storage device (342) of said electronic circuit (340) into said storing means (302; 102, 32; 202, 52) of said analysis unit (30; 50) to form a second memory map (M32);
mapping said storing means (302; 102, 32; 202, 52) of said analysis unit (30; 50) into said storage device (342) of said electronic circuit (340) to form a third memory map (M33);
selecting one from said target central processing unit (341) of said electronic circuit (340) and said executing means (301; 101, 31) of said analysis unit (30; 50) to execute said target program;
transmitting said target program from said computer (20) to said storing means (302; 102, 32; 202, 52) of said analysis unit (30; 50) in accordance with said first memory map (M31) when said target central processing unit (341) of said electronic circuit (340) is selected in said selecting step;
instructing said executing means (301; 101, 31) of said analysis unit (30) to execute said target program and have said execution result stored in said storing means (302; 102, 32) of said analysis unit (30) in accordance with said second memory map (M32) when said executing means (301; 101, 31) of said analysis unit (30) is selected in said selecting step;
instructing said target central processing unit (341) of said electronic circuit (340) to access said storing means (302; 202, 52) of said analysis unit (50) in accordance with said third memory map (M33) to execute said target program and have said execution result stored in said storing means (302; 202, 52) of said analysis unit (50) in accordance with said third memory map (M33) when said target central processing unit (341) of said electronic circuit (340) is selected in said selecting step;
reading out the stored execution result from said storing means (302; 102, 32; 202, 52) of said analysis unit (30; 50) in accordance with said first memory map (M31); and
analyzing said electronic circuit (340) on the basis of the read execution result.
